# EUROPÄISCHE PATENTSCHRIFT

(11) **EP 0 993 779 B1**
(45) Veröffentlichungstag und Bekanntmachung des Hinweises auf die Patenterteilung: **04.04.2001**
(21) Anmeldenummer: 99114487.4
(22) Anmeldetag: 23.07.1999
(51) Int. Cl.: A23G 9/28, A47J 43/28, A21C 5/00, A21C 11/00, A47J 43/20

(54) **Gerät zum Portionieren und Formen von Teig zu Plätzchen**
Device for forming and portioning cookie or biscuit dough
Appareillage pour la formation et separation du pâte des biscuits

(30) Priorität: 20.08.1998 DE 19837830
(43) Veröffentlichungstag der Anmeldung: 19.04.2000
(73) Patentinhaber: W. u. H. Küchle GmbH & Co., D-89312 Günzburg (DE); Elasto Form Gerhard Sperber, 92237 Sulzbach-Rosenberg (DE)
(72) Erfinder: Schrader, Peter, 86488 Nattenhausen (DE); Guzik, Werner, 92224 Amberg (DE)
(74) Vertreter: Charrier, Rolf, Dipl.-Ing.

(56) Entgegenhaltungen:
- EP-A- 0 331 520
- DE-A- 2 044 771
- GB-A- 795 285
- US-A- 1 343 123
- US-A- 1 842 709
- US-A- 3 208 404

## Beschreibung

Die Erfindung betrifft ein Gerät zum Portionieren und Formen von Teig zu Plätzchen gemäß dem Oberbegriff des Patentanspruches 1.

Aus der GB 795 285 ist ein Gerät gemäß dem Oberbegriff des Patentanspruches 1 bekannt, welches zum Portionieren von Eiskrem oder dgl. dient. Dieses Gerät besteht aus einer Vielzahl von Einzelteilen. Es ist daher relativ teuer in der Herstellung und zu Reinigungszwecken schwierig zu zerlegen und wieder zusammen zu bauen. Dieses Problem tritt vor allem bei eiweißhaltigen Teigen auf, bei denen es sich um sehr klebrige Massen handelt, die bei der Reinigung nur dann entfernbar sind, wenn das Gerät vollständig auseinander genommen werden kann und alle Oberflächen des Gerätes und seine Einzelteile frei zugänglich sind. Bei dem vorbekannten Gerät zur Portionierung von Eiskrem gemäß der vorbenannten Druckschrift besteht das Griffteil aus einem Vorderteil, welches mit der Schöpfmulde fest verbunden ist und einem Handgriff, der mit dem Vorderteil verschraubt ist. An der Außenseite der Schöpfmulde ist eine zu deren zentraler Öffnung konzentrische Lagerbüchse vorgesehen. In diese Lagerbüchse greift der Drehzapfen des Abstreifteiles ein. Damit dieses in der Lagerbüchse gehalten wird, ist an dem einen Ende des Drehzapfens ein Sperrglied drehbar angeordnet. Bei Drehung dieses Sperrgliedes in eine bestimmte Stellung kann der Drehzapfen des Abstreifteiles aus der Lagerbüchse herausgezogen werden. Um jedoch auch die übrigen Teile zerlegen zu können, z.B. um den Betätigungshebel abzubauen, damit dessen Verzahnungsteil und auch die Lagerbüchse gereinigt werden können, ist ein Schraubendreher erforderlich. Da auf den Betätigungshebel außerdem eine Schenkelfeder einwirkt, löst sich diese beim Verlegen des Gerätes und ist dann nur noch schwierig einbaubar. Durch die Vielzahl der Teile ergeben sich auch bei der Herstellung höhere Fertigungs- und Montagekosten. Da dieses bekannte Gerät zum Portionieren schwierig zu zerlegen und wieder zusammenzubauen ist, eignet es sich zwar zur Portionierung für Eiskrem, dessen Rückstände durch Eintauchen in heißes Wasser bei der Reinigung des Gerätes auch ohne zerlegen desselben entfernt werden können, nicht jedoch für die nachstehend genannten eiweißhaltigen Teige und Massen.

Ähnliches gilt für einen anderen, aus der DE-OS 20 44 771 bekannten Portionierer für Speiseeis und andere Nahrungs- und Genußmittel. Dieser weist an einem Ende eines zweiarmigen Handgriffes eine Schale auf, über deren Innenkontur ein bogenförmiges Abstreifmesser bewegbar ist. Der Handgriff besteht aus zwei Armen aus federnden Material. Beim Zusammendrücken dieser beiden Arme wird über eine Zahnstange ein Ritzel angetrieben, welches über eine Antriebsachse mit dem Abstreifmesser verbunden ist. Alle Teile dieser Portionierer soll außer für Speiseeis auch für andere Nahrungs- und Genußmittel wie Püree, Reis, Salate, Fleisch- und Gneßmassen, Pudding, Quark, Marmelade oder dgl. geeignet sein. Da jedoch alle seine Teile fest zusammengebaut und nicht leicht voneinander lösbar sind, ist dieser Portionierer nur schwer zu reinigen.

Makronen und andere eiweißhaltige, fettfreie Teige, die zu Plätzchen verarbeitet werden, sind im Prinzip aufgeschäumte, sehr klebrige Massen. Zu ihrer Herstellung werden Eier getrennt. das Eiweiß wird mit Zucker zu einer schaumigen, schnittfesten Masse aufgeschlagen und anschließend werden Kerne, Aromen, Trockenfrüchte oder auch Ceralien untergehoben. Diese sehr klebrige Teigmasse muß anschließend in kleine, plätzchengroße Mengen portioniert und gebacken werden, wobei das Eiweiß gerinnt und der Zucker karamelisiert. Damit der Backvorgang gelingt, ist es nötig, derartige Teige gegen starke Unterhitze zu schützen. Zu diesem Zweck werden sie auf Oblaten dressiert. Dies geschieht dadurch, daß der Teig in einen Spritzbeutel umgefüllt wird und von diesem aus die einzelnen Portionen auf die Oblaten gespritzt werden. Man kann auch mit einem Löffel aus der Teigmasse eine Portion ausstechen und unter Zuhilfenahme eines zweiten Löffels auf die Oblate abstreifen. In beiden Fällen ist die Portionierung und auch die Formgebung ungenau, was sich auf das Backergebnis auswirkt. Auch ist die Handhabung umständlich. Der sehr klebrige Teig kann selbst an dem zweiten Löffel kleben bleiben, sodaß mehrmaliges gegenseitiges Löffelabstreifen nötig ist und dennoch zielgenaue Portionierung nicht gesichert ist. Aus diesem Grund muß auf dem Backblech zur benachbarten Oblate bzw. zum benachbarten Plätzchen ein entsprechend großer abstand gehalten werden, wodurch sich eine schlechte Ausnutzung der Backblechfläche ergibt.

Der Erfindung liegt die Aufgabe zugrunde, ein Gerät zum Portionieren und Formen von Teig zu Plätzchen mit den Merkmalen des Oberbegriffes des Anspruches 1 zu schaffen, welches einfach im Aufbau und damit kostengünstig herstellbar, sowie leicht zu zerlegen und zusammenbaubar und damit einfach zu reinigen ist.

Diese Aufgabe wird durch die im Patentanspruch 1 angegebenen Merkmale gelöst.

Bei dieser Ausgestaltung kann das gesamte Gerät aus nur 4 Teilen bestehen, nämlich

dem Oberteil, dem Unterteil, dem Betätigungshebel und dem Abstreifteil. Dank dieser wenigen Teile ist es insbesondere aus Kunststoff einfach herstellbar und auch einfach zusammenbaubar. Da der Betätigungshebel zwischen Oberteil und Unterteil angeordnet und eingebaut ist, sind zu seiner Halterung keine weiteren Teile erforderlich. Ähnliches gilt für das Abstreifteil, welches mit dem druckknopfartigen Ende des Drehzapfens in die am Oberteil vorgesehene Lagerbüchse in einfacher Weise einschnappbar ist. Die am Oberteil vorgesehene Lagerbüchse bietet auch trotz der Einfachheit des Gerätes eine gute Lagerung für den Drehzapfen des Abstreifteiles, denn dieser ist einerseits in der Lagerbüchse und andererseits in der zentralen Öffnung der Schöpfmulde drehbar gelagert. Zur Reinigung des Gerätes braucht das Oberteil nur vom Unterteil abgenommen zu werden, wobei das druckknopfartige Ende des Drehzapfens selbsttätig aus der Lagerbüchse ausrastet. Nach Abnahme des Oberteiles kann auch der Betätigungshebel leicht herausgenommen werden. Der Zusammenbau erfolgt so, daß der Betätigungshebel auf dem Unterteil angeordnet und dann das Oberteil auf das Unterteil eingeschnappt wird. Anschließend kann das Abstreifteil mit seinem druckknopfartigen Ende in die Lagerbüchse eingeschnappt werden. Das Zerlegen des Gerätes zu Reinigungszwecken und sein anschließender Zusammenbau sind so einfach, daß sie auch von jeder Hausfrau leicht durchgeführt werden können.

Mit einem solchen Gerät können auch sehr klebrige Teigmassen in einfacher Weise portioniert und zu Plätzchen geformt werden. Hierzu erfaßt man das Gerät an seinem Griffteil, sticht mit der Schöpfmulde in die Teigmasse und hebt eine Teigmenge aus der Teigmasse heraus. Indem man den freien Rand der Schöpfmulde über den Rand der Teigschüssel zieht, wird überschüssiger Teig abgestreift. Man kann nun entweder das Gerät um 90° drehen, so daß der offene Teil der mit einer Teigportion gefüllten Schöpfmulde nach oben weist, und kann dann von oben her eine Oblate auf die Teigportion aufdrücken. Man kann aber auch das Gerät mit nach unten gerichteter Schöpfmuldenöffnung halten und die Oblate von unten her oder in jeder beliebigen Stellung des Gerätes auf die Teigportion aufdrücken. Durch die Hygroskopizität des rohen Teiges verkleistert die Oblate mit der noch in der Schöpfmulde befindlichen Teigportion. Das Gerät wird dann in einer Stellung, in welcher die Öffnung der Schöpfmulde nach unten gerichtet und die Oblate unterhalb der Teigportion angeordnet ist, über ein Backblech gebracht. Durch Betätigung der Betätigungseinrichtung wird das Abstreifteil um die Zentrumsachse gedreht, wobei seine Abstreifarme die Teigportion von der Innenfläche des Hohlraumes der Schöpfmulde lösen. Die Teigportion erhält hierdurch ihre Form und fällt, auf der Oblate ruhend, auf das Backblech. Es können damit in einfacher Weise gleichgroße Teigportionen gebildet, geformt und auf der Oblate ruhend auf das Backblech gebracht werden. Da man hierzu und auch anschließend die Plane nicht mehr zu berühren braucht, können die geformten Plätzchen in sehr dichter Anordnung zueinander unter optimaler Ausnutzung der Backblechfläche auf dem Backblech angeordnet werden. Die gleichgroßen und gleichgeformten Teigportionen haben den weiteren Vorteil, daß die Backzeiten für alle Plätzchen gleich groß sind, wodurch bessere Backergebnisse erzielt werden. Dies ist vor allem dann der Fall, wenn durch die Hitze die Plätzchen außen nur eine Kruste bekommen und innen nur leicht getrocknet werden sollen, um einen hohen Feuchtigkeitskern einzuschließen.

Vorteilhafte Ausgestaltungen der Erfindung sind in den Unteransprüchen gekennzeichnet.

Die Erfindung ist in folgenden, anhand von in der Zeichnung dargestellten Ausführungsbeispielen näher erläutert. Es zeigen:
- **Figur 1**: einen Längsschnitt einer ersten Ausführungsform des Gerätes nach der Linie I-I der Figur 2,
- **Figur 1a**: einen Teillängsschnitt einer anderen Ausführungsform,
- **Figur 2**: die Unteransicht des Gerätes in Richtung II der Figur 1,
- **Figur 3**: einen weiteren Längsschnitt nach der Linie III-III der Figur 1,
- **Figur 4**: Einzelheiten eines Abstreifarmes an der Stelle IV der Figur 2,
- **Figur 5**: ein zweites Ausführungsbeispiel des Gerätes in etwas abgewandelter Form in explosionsartiger Darstellung,
- **Figur 6**: eine schematische Darstellung der Handhabung des Gerätes in verschiedenen Phasen.

Das Gerät zum Portionieren und Formen von Teig zu Plätzchen weist zunächst ein Griffteil 1 auf, an dessen einem Ende eine Schöpfmulde 2 angeordnet ist. Die Schöpfmulde weist einen rotationssymmetrischen, im wesentlichen domförmigen Hohlraum 3 auf, wobei die Form des Hohlraumes jedoch nicht auf eine exakte Halbkugel beschränkt sein soll. Entscheidend ist nur, daß der Hohlraum rotationssymmetrisch ist. In dem Hohlraum 3 ist ein Abstreifteil 4 angeordnet, welches um die Zentrumsachse A des Hohlraumes drehbar ist. Dieses Abstreifteil 4 weist mehrere Abstreifarme 5 auf. Vorzugsweise sind vier in gleichen Drehwinkeln α, d.h. um 90 ° zueinander angeordnete Abstreifarme 5 vorgesehen. Die Abstreifarme sollten in Drehrichtung möglichst schmal gehalten sein, damit sie eine möglichst kleine Oberfläche aufweisen, an welcher der Teig haftet. Die Abstreifarme sollten ferner dicht an der Innenfläche 3a des Hohlraumes 3 anliegen, damit die gesamte Teigportion aus der Schöpfmulde 2 abgestreift wird. Ferner sollten die Abstreifarme 5 eine möglichst geringere Dicke d, gemessen senkrecht zur Innenfläche 3 a ausweisen.

Es ist ferner vorteilhaft, wenn jeder der Abstreifarme 5 an seinen Längskanten 5a zur Innenfläche 3a des Hohlraumes 3 hin abgeschrägt und somit messerartig ausgebildet ist. Anstelle de Abschrägung können die Längskanten auch abgerundet sein. Das Abstreifteil 4 weist fernen einen zentralen Drehzapfen 6 auf, der in eine zentrale, kreisförmige Öffnung 7 der Schöpfmulde 2 drehbar eingreift. Mit dem einen, ersten Ende des Drehzapfens 6 sind die Abstreifarme 5 verbunden, die sich jeweils vom Drehzapfen 6 aus bis zum freien Rand 2a der Schöpfmulde 2 bzw. des Hohlraumes 3 erstrecken. An dem an der entgegengesetzten Seite des Hohlraumes 3 aus der Schöpfmulde 2 herausragenden Teil des Drehzapfens greift eine Betätigungseinrichtung an, mittels welcher das Abstreifteil 4 um die Zentrumsachse A drehend antreibbar ist.

An dem Drehzapfen 6 ist ferner ein Ritzel 8 angeordnet, in welches ein Verzahnungsteil 9 der Betätigungseinrichtung 10 eingreift. Die Betätigungseinrichtung 10 ist ein Betätigungshebel 11, der um eine sich parallel zur Zentrumsachse A erstreckende und mit Abstand von dieser angeordnete Schwenkachse am Griffteil 1 schwenkbar gelagert ist. Dabei ist die Betätigungseinrichtung 10 so ausgebildet, daß der Drehzapfen 6 um etwas mehr als ein Drehwinkel α, in welchem die Abstreifarme 5 zueinander angeordnet sind, drehbar ist. Im vorliegenden Fall ist also der Drehzapfen um etwas mehr als 90 ° drehbar.

An gegenüberliegenden Seiten des Betätigungshebels 11 sind zwei Betätigungsteile 12 vorgesehen, von denen je eines an gegenüberliegenden Seiten des Griffteiles vorsteht, wie aus Figur 3 ersichtlich ist. Die Betätigungsteile sind vorzugsweise in dem an die Schöpfmulde 2 angrenzenden Bereich des Griffteiles 1 angeordnet, so daß man, wenn man das Griffteil 1 mit der Hand umschließt, mit dem Daumen auf das eine Grifftil und mit dem Zeigefinger auf das gegenüberliegende Griffteil 12 drücken kann, um hierdurch den Betätigungshebel 11 in Pfeilrichtung zu verschwenken und durch den Eingriff des Verzahnungsteiles 9 in das Ritzel 8 das Abstreifteil 4 zu drehen.

Das Griffteil 1 besteht aus einem Oberteil 14 und einem Unterteil 15. Der Betätigungshebel 11 ist zwischen beiden Teilen 14, 15 angeordnet. Die Schöpfmulde 2 ist am Unterteil 15 angeordnet.

Das Oberteil 14 erstreckt sich bis über den Bereich der Schöpfmulde 2 und weist innen eine Lagerbüchse 16 für das zweite Ende 6a des Drehzapfens 6 auf.

Das zweite Ende des Drehzapfens 6a ist druckknopfartig in der Lagerbüchse 16 einschnappbar. Zu diesem Zweck weist das Ende 6a und/oder die Lagerbüchse 16 jeweils mindestens einen Axialschlitz 18 auf, so daß das freie Ende 6a beim Eindrücken in die Lagerbüchse 16 etwas zusammengedrückt wird und dann mit seinem gegenüber der Öffnung der Lagerbüchse 16 verdickten Kopf druckknopfartig in die Lagerbüchse 16 einschnappt. Hierdurch wird der Drehzapfen in der Schöpfmulde 2 gehalten, kann jedoch zu Reinigungszwecken nach unten aus der Schöpfmulde 2 herausgezogen werden.

Um auch die übrigen Teile des Gerätes leicht reinigen zu können, ist das Oberteil 14 des Griffteiles 1 von dem Unterteil 15 leicht lösbar. Zu diesem Zweck sind zwischen dem Oberteil 14 und dem Unterteil 15 zweckmäßig Verrrastungsmittel 19, 20 vorgesehen.

Am schöpfmuldenseitigen Ende des Oberteils 14 ist ein Vorsprung 19a angeordnet, der in eine Ausnehmung 19b des Unterteils 15 eingreift. An dem der Schöpfmulde 2 abgewandten Ende des Oberteils 14 ist eine Lasche 20a vorgesehen, die an einer vom Unterteil 15 vorstenenden Nase 20b einrasten kann.

Ferner sind das Oberteil 14 und das Unterteil 15 des Griffteiles 1 zweckmäßig schalenförmig ausgebildet und greifen an ihren einander zugekehrten Rändern ineinander.

Alle Teile des Gerätes bestehen zweckmäßig aus Kunststoff, wodurch das Gerät besonders kostengünstig herstellbar ist und auch ein geringes Gewicht aufweist. Gegebenenfalls können jedoch einzelne oder auch alle Teile aus Metail bestehen.

Das Abstreifteil 4, bestehend aus Drehzapfen 6, Abstreifarmen 5, Ritzel 8 und dem zweiten Ende 6a, ist zweckmäßig einstückig ausgebildet.

Zur Reinigung des Gerätes kann man die Lasche 20a von der Nase 20b abheben und hierdurch zunächst das Oberteil 14 vom Unterteil 15 auf der rechten Seite etwas abheben, wie mit dem Pfeil B angedeutet ist. Beim weiteren Abheben wird das Ende 6a aus der Lagerbüchse 16 herausgezogen, so daß das Abstreifteil 4 nach unten aus der Schöpfmulde 2 entnommen werden kann. Es kann dann das Oberteil 14 gegenüber dem Unterteil 15 in Längsrichtung beider Teile verschoben werden, wodurch der Vorsprung 19a aus der Ausnehmung 19b herausgezogen wird und beide Teile 14, 15 endgültig voneinander gelöst werden. Dann liegt der Betätigungshebel 11 frei und kann vom Lagerzapfen 22 nach oben abgezogen werden. Alle Teile lassen sich dann leicht reinigen. Beim Zusammenbau wird zunächst der Betätigungshebel 11 wieder auf den Lagerzapfen 22 aufgesetzt. Dann wird das Oberteil 14 mit seinem Vorsprung 19a in die Ausnehmung 19b eingeschoben und die Lasche 20a an der Nase 20b eingeschnappt. Als letztes kann das Abstreifteil in die Schöpfmulde eingesetzt und mit seinem zweiten Ende 6a in der Lagerbüchse 16 eingeschnappt werden. Durch Einführungsfasen oder -schrägen am Ritzel 8 und am Verzahnungsteil 9 zentrieren sich beide Teile beim Eindrücken. Somit ist das Gerät damit wieder betriebsbereit.

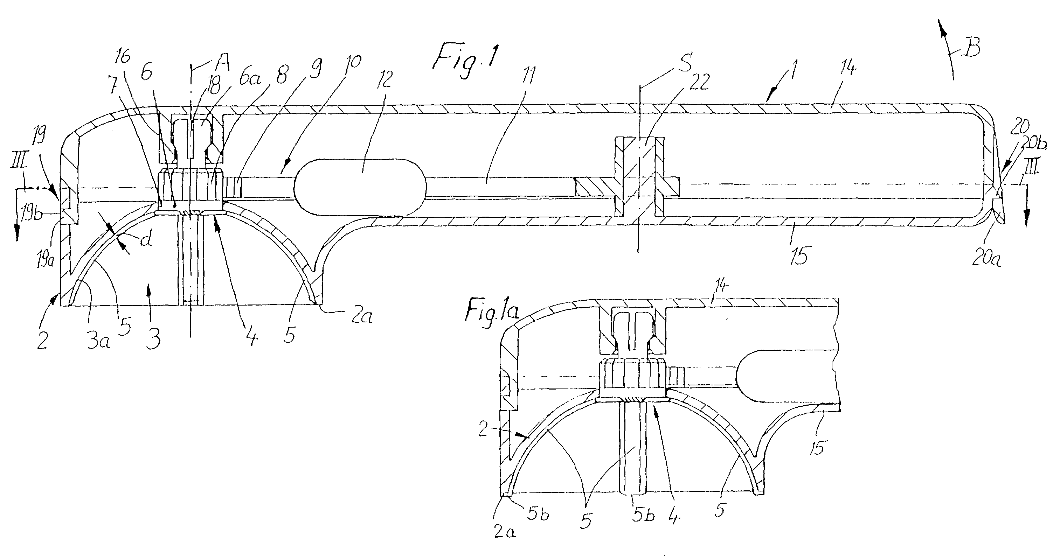

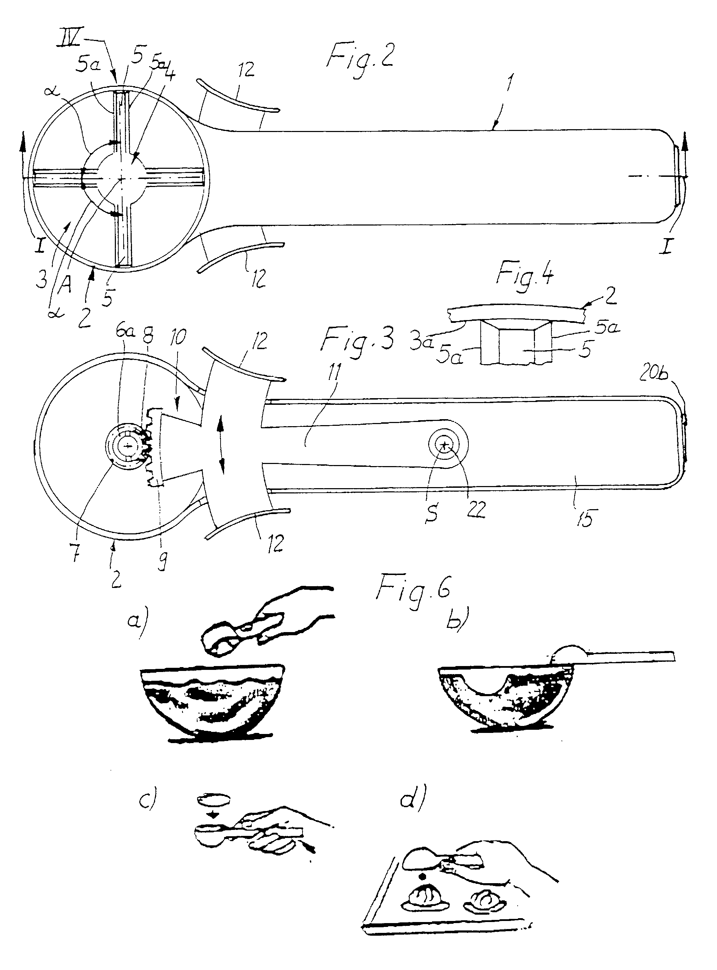

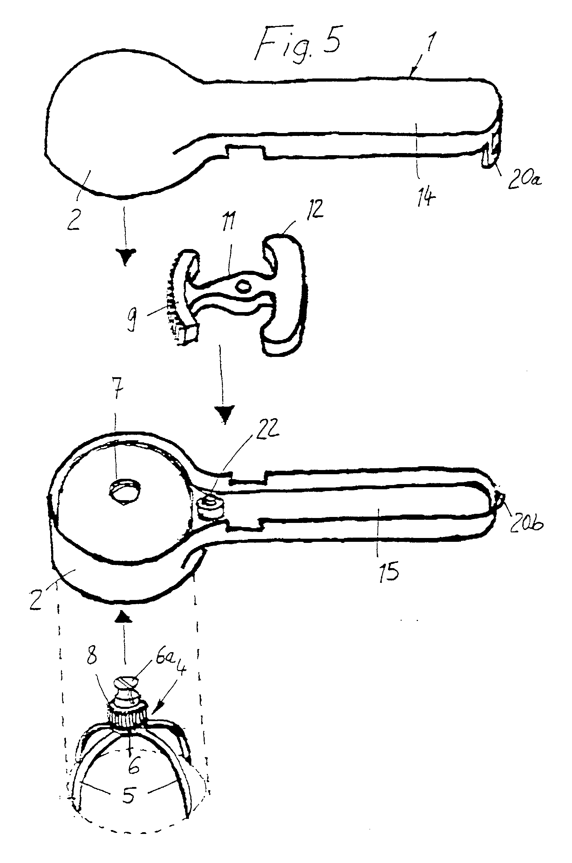

Die in Figur 5 dargestellte Ausführungsform des Gerätes entspricht im wesentlichen der zuvor anhand der Figuren 1 - 4 beschriebenen Ausführungsform, so daß für Teile gleicher Funktion die gleichen Bezugszeichen verwendet worden sind und obige Beschreibung sinngemäß zutrifft. Die in Figur 5 dargestellte Ausführungsform unterscheidet sich nur durch die konstruktive Ausgestaltung des Betätigungshebels 11, dessen Schwenkachse S näher zur Zentrumsachse A gerückt ist. Anhand der Explosionszeichnung gemäß Figur 5 ist jedoch gut zu erkennen, wie die Teile zusammengesetzt werden.

Anhand der Figur 6 wird nunmehr die Handhabung des Gerätes erläutert. Gemäß Figur 6a taucht man die Schöpfmulde des Gerätes in die Teigmasse T ein und entnimmt eine Teigmenge, die envas größer ist als das Fassungsvolumen der Schöpfmulde 2. Überschüssiger Teig kann gemäß Figur 6b am Schüsselrand R abgestreift werden. Hierdurch ist sichergestellt, daß die einzelnen Teigportionen immer gleich groß sind. Man kann dann entweder das Gerät mit der mit Teig gefüllten Schöpfmulde umdrehen und gemäß Figur 6c eine Oblate O von oben her auf die Teigportion aufdrücken. Man kann jedoch auch auf das Umdrehen des Gerätes verzichten, so daß die Öffnung der Schöpfmulde 2 nach unten gerichtet ist und dann die Oblate von unten her an die Teigportion andrücken. Die Oblate verkleistert dann durch ihre Hygroskopizität mit der Teigportion. Das Gerät wird dann gemäß Figur 6d mit nach unten gerichteter Oblate über ein Backblech gebracht. Indem man je nach Stellung des Betätigungshebels 11 mit dem Daumen oder dem Zeigefinger auf eines der Betätigungsteile 12 drückt, kann über das Verzahnungsteil 9 und das Ritzel 8 das Abstreifteil 4 um die Achse A gedreht werden. Hierbei lösen die dicht an der Innenfläche 3a des Hohlraumes 3 anliegenden Abstreifarme die klebrige Teigmasse von der Innenfläche 3a. Da die Abstreifarme 5a eine verhältnismäßig kleine Oberfläche aufweisen, löst sich die Teigportion infolge ihres Gewichtes von den Abstreifarmen 5 und fällt auf der Oblate O ruhend auf das Backblech. Mittels des Gerätes ist eine punktgenaue Positionierung auf dem Bachblech möglich, so daß eine optimale Ausnützung der Backblechfläche erreicht wird.

Das neue Gerät zum Portionieren von Teig zu Plätzchen kann selbstverständlich in verschiedenen Größen hergestellt werden. Hierbei wird vor allem das Fassungsvermögen der Schöpfmulde 2 verändert. Bei geringerem Fassungsvermögen hat es sich als zweckmäßig erwiesen, die in Figur 1a dargestellte Form des Abstreifteiles zu verwenden. Bei dieser Ausführungsform erstrecken sich die Abstreifarme 5' bis über den freien Rand 2a der Schöpfmulde 2 und umfassen mit ihren freien Enden 5b den freien, ringförmigen Rand 2a der Schöpfmulde. Bei Drehung des Abstreifteiles 4 streifen die freien Enden 5b über den freien Rand 2a. Durch diesen zusätzlichen Abstreifeffekt werden auch kleinere Teigmassen mit im Verhältnis zu ihrem Gewicht großer Oberfläche vollkommen aus der Schöpfmulde gelöst und fallen durch ihr Eigengewicht aus der Schöpfmulde 2. Die übrigen Teile der in Figur 1a dargestellten Ausführungsform entsprechen dem weiter oben detailliert beschriebenen Ausführungsbeispiel, weshalb für Teile gleicher Funktion die gleichen Bezugszeichen verwendet worden sind und die zum Ausführungsbeispiel gemäß Figur 1 bis 4 gemachten Ausführungen sinngemäß auch auf Figur 1a zutreffen.

## Patentansprüche

1. Gerät zum Portionieren und Formen von Teig zu Plätzchen,
mit einem zweiteiligen Griffteil (1) an dessen einem Ende eine Schöpfmulde (2) mit einem rotationssymmetrischen, im wesentlichen domförmigen Hohlraum (3) und einer zentralen, kreisförmigen Öffnung (7) angeordnet ist,
mit einem im Hohlraum (3) angeordneten Abstreifteil (4), welches um die Zentrumsachse (A) des Hohlraumes (3) drehbar ist und einen zentralen Drehzapfen (6) aufweist, der in die zentrale Öffnung (7) drehbar eingreift, an seinem ersten Ende mehrere dicht an der Innenfläche (3a) des Hohlraumes (3) anliegende Abstreifarme (5) trägt und an seinem; an der entgegengesetzen Seite des Hohlraumes (3) aus der Schöpfmulde (2) herausragenden Teil ein Ritzel (8) aufweist, und
mit einem Betätigungshebel (11) versehen ist, der um eine sich parallel zur Zentrumsachse (A) und mit Abstand von dieser erstreckenden Schwenkachse (S) am Griffteil (1) schwenkbar gelagert ist und eine in das Ritzel (8) eingreifende Verzahnungsteil (9) aufweist, **dadurch gekennzeichnet,**
daß das Griffteil (1) aus einem Oberteil (14) und einem von diesem leicht lösbaren Unterteil (15) besteht, zwischen denen der Betätigungshebel (11) angeordnet ist,
daß die Schöpfmulde (2) am Unterteil (15) angeordnet ist,
daß sich das Oberteil (14) bis über den Bereich der Schöpfmulde (2) erstreckt und am Oberteil eine Lagebüchse (16) für das zweite Ende (6a) des Drehzapfens (6) vorgesehen ist, und
daß das zweite Ende (6a) des Drehzapfens (6) druckknopfartig in die Lagerbüchse (16) drehbar einschnappbar ist

2. Gerät nach Anspruch 1, **dadurch gekennzeichnet**, daß zwischen Oberteil (14) und Unterteil (15) Verrastungsmittel (19, 20) vorgesehen sind.

3. Gerät nach Anspruch 2, **dadurch gekennzeichnet**, daß am schöpfmuldenseitigen Ende des Oberteils (14) ein Vorsprung (19a) vorgesehen ist, der in eine Ausnehmung (19b) des Unterteils (15) eingreift.

4. Gerät nach Anspruch 2, **dadurch gekennzeichnet**, daß an dem der Schöpfmulde (2) abgewandten Ende des Oberteils (14) eine Lasche (20a) angeordnet ist, die an einer vom Unterteil (14) vorstehenden Nase (20b) einrastet.

5. Gerät nach einem der vorhergehenden Ansprüche, **dadurch gekennzeichnet**, daß das Oberteil (14) und Unterteil (15) des Griffteiles (1) jeweils schalenförmig ausgebildet sind.

6. Gerät nach Anspruch 1, **dadurch gekennzeichnet**, daß das zweite Ende (6a) des Drehzapfens (6) und/oder die Lagerbüchse mindestens einen Axialschlitz (18) aufweisen.

7. Gerät nach einem der vorhergehenden Ansprüche, **dadurch gekennzeichnet**, daß an gegenüberliegenden Seiten des Betätigungshebel (11) zwei Betätigungsteile (12) vorgesehen sind, von denen jeweils eines an der gegenüberliegenden Seite des Griffteiles (1) vorsteht.

8. Gerät nach einem der vorhergehenden Ansprüche, **dadurch gekennzeichnet**, daß am Drehzapfen (6) drei oder vier in gleichen Drehwinkeln (α) zueinander angeordnete Abstreifarme (5) vorgesehen sind, die sich jeweils vom Drehzapfen aus zum freien Rand (2a) der Schöpfmulde (2) bzw. des Hohlraumes (3) erstrecken.

9. Gerät nach den Anspruch 8, **dadurch gekennzeichnet**, daß sich die Abstreifarme (5) bis über den freien Rand (2a) der Schöpfmulde (2) erstrecken und mit ihren freien Enden (5b) den freien Rand (2a) erfassen.

10. Gerät nach einem der vorhergehenden Ansprüche, **dadurch gekennzeichnet**, daß jeder der Abstreifarme (5) an seinen Längskanten (5a) zur Innenfläche (3a) des Hohlraumes (3) hin abgeschrägt und somit messerartig ausgebildet ist.

11. Gerät nach einem der vorhergehenden Ansprüche, **dadurch gekennzeichnet**, daß jeder der Abstreifarme an der Innenfläche (3a) des Hohlraumes (3) abgekehrten Seite seiner Längskanten abgerundet ist.

12. Gerät nach einem der vorhergehenden Ansprüche, **dadurch gekennzeichnet**, daß der Hohlraum im wesentlichen kalottenförmig ist.

13. Gerät nach einem der vorhergehenden Ansprüche, **dadurch gekennzeichnet**, daß das Abstreifteil (4) einstückig ausgebildet ist.

14. Gerät nach einem der vorhergehenden Ansprüche, **dadurch gekennzeichnet**, daß das Abstreifteil (4) und/oder das Oberteil (14) und/oder das Unterteil (15) und/oder das Betätigungsteil aus Kunststoff (10) bestehen.

## Claims

1. Device for portioning and shaping dough for biscuits or cookies,
with a two-piece handle part (1) at one end of which there is a scoop (2) with a rotationally symmetrical, essentially dome-shaped cavity (3) and a central circular opening (7),
with a scraping part (4) which is disposed in the cavity (3) and is rotatable about the central axis (A) of the cavity (3) and exhibits a central pivot (6) which engages rotatably in the central opening (7) and at its first end carries a plurality of scraping arms (5) lying snugly on the internal surface (3a) of the cavity (3), and on its part projecting out of the scoop (2) on the opposite side of the cavity (3) exhibits a pinion (8), and
is provided with an operating lever (11) which is mounted pivotable on the handle part (1) about a pivot axis (S) extending parallel to the central axis (A) a distance from it, and exhibits a toothed part (9) engaging in the pinion (8),
characterised in that
the handle part (1) consists of an upper part (14) and a lower part (15) which is easily detachable from the latter and between which the operating lever (11) is arranged,
the scoop (2) is arranged on the lower part (15),
the upper part (14) extends beyond the area of the scoop (2) and a bearing bush (16) for the second end (6a) of the pivot (6) is provided on the upper part, and
the second end (6a) of the pivot (6) can be snapped rotatably into the bearing bush (16) like a press-stud.

2. Device according to claim 1, characterised in that locking means (19, 20) are provided between the upper part (14) and the lower part (15).

3. Device according to claim 2, characterised in that at the scoop end of the upper part (14) there is a projection (19a) which engages in a recess (19b) of the lower part (15).

4. Device according to claim 2, characterised in that at the end of the upper part (14) remote from the scoop (2) there is a tab (20a) which engages on a lug (20b) projecting from the lower part (14).

5. Device according to one of the preceding claims, characterised in that the upper part (14) and the lower part (15) of the handle part (1) are each embodied in the form of a shell.

6. Device according to claim 1, characterised in that the second end (6a) of the pivot (6) and/or the bearing bush exhibit at least one axial slot (18).

7. Device according to one of the preceding claims, characterised in that on opposite sides of the operating lever (11) there are two operating parts (12) each of which projects on the opposite side of the handle part (1).

8. Device according to one of the preceding claims, characterised in that on the pivot (6) there are three or four scraping arms (5) which are arranged at equal rotational angles (α) to one another and each extend from the pivot out to the free edge (2a) of the scoop (2) or cavity (3).

9. Device according to claim 8, characterised in that the scraping arms (5) extend beyond the free edge (2a) of the scoop (2) and cover the free edge (2a) with their free ends (5b).

10. Device according to one of the preceding claims, characterised in that on its longitudinal edges (5a) each of the scraping arms (5) is bevelled towards the internal surface (3a) of the cavity (3) and thus embodied like a knife.

11. Device according to one of the preceding claims, characterised in that each of the scraping arms is rounded on the side of its longitudinal edges remote from the internal surface (3a) of the cavity (3).

12. Device according to one of the preceding claims, characterised in that the cavity is essentially hemispherical in shape.

13. Device according to one of the preceding claims, characterised in that the scraping part (4) is embodied in one piece.

14. Device according to one of the preceding claims, characterised in that the scraping part (4) and/or the upper part (14) and/or the lower part (15) and/or the operating part (10) are made of plastic.

## Revendications

1. Dispositif de formation de portions et de formage de pâte pour la réalisation de petits gâteaux, comprenant
une poignée (1) en deux parties à une extrémité de laquelle est disposé un godet en forme de louche (2) comportant une cavité (3) à symétrie de révolution, essentiellement en forme de coupole, et une ouverture circulaire centrale (17),
une partie de séparation (4), disposée dans la cavité (3), qui peut tourner autour d'un axe central (A) de la cavité (3) et comporte un pivot rotatif (6) central qui est engagé d'une manière rotative dans l'ouverture centrale (7), porte à sa première extrémité plusieurs bras de séparation (5) s'appliquant étroitement sur la surface intérieure (3q) de la cavité (3) et comporte un pignon (8) à l'endroit de sa partie qui fait saillie hors du godet en forme de louche (2) sur le côté opposé de la cavité (3) et
un levier d'actionnement (11) qui est monté d'une manière pivotante sur la poignée (1) autour d'un axe de pivotement (S) s'étendant parallèlement à l'axe central (A) et à distance de celui-ci et qui comporte une partie dentée (9) engrenant avec le pignon (8),
caractérisé
en ce que la poignée (1) est constituée d'une partie supérieure (14) et d'une partie inférieure (15) pouvant être facilement séparée de celle-ci, entre lesquelles le levier d'actionnement (11) est disposé,
en ce que le godet en forme de louche (2) est disposé sur la partie inférieure (15),
en ce que la partie supérieure (14) s'étend jusqu'au-delà de la zone du godet en forme de louche (2) et il est prévu, sur la partie supérieure, un manchon de montage (16) pour la seconde extrémité (6a) du pivot rotatif (6) et
en ce que la seconde extrémité (6a) du pivot rotatif (6) peut être enclenchée à la façon d'un bouton-pression dans le manchon de montage (16) de manière à pouvoir tourner.

2. Dispositif suivant la revendication 1, caractérisé en ce que des moyens d'enclenchement (19, 20) sont prévus entre la partie supérieure (14) et la partie inférieure (15).

3. Dispositif suivant la revendication 2, caractérisé en ce qu'il est prévu, à l'extrémité de la partie supérieure (14) située du côté du godet en forme de louche, une partie en saillie (19a) qui s'engage dans une partie en retrait (19b) de la partie inférieure (15).

4. Dispositif suivant la revendication 2, caractérisé en ce qu'il est prévu, disposée à l'extrémité de la partie supérieure (14) située à l'opposé du godet en forme de louche (2), une languette (20a) qui peut s'enclencher sur un bec (20b) en saillie sur la partie inférieure (14).

5. Dispositif suivant l'une des revendications précédentes, caractérisé en ce que la partie supérieure (14) et la partie inférieure (15) de la poignée (1) sont réalisées chacune en forme de coquille.

6. Dispositif suivant la revendication 1, caractérisé en ce que la seconde extrémité (6a) du pivot rotatif (6) et/ou le manchon de montage comportent au moins une fente axiale (18).

7. Dispositif suivant l'une des revendications précédentes, caractérisé en ce qu'il est prévu, sur des côtés opposés du levier d'actionnement (11), deux parties d'actionnement (12) dont chacune fait saillie sur le côté opposé respectif de la poignée (1).

8. Dispositif suivant l'une des revendications précédentes, caractérisé en ce que, sur le pivot rotatif (6), il est prévu trois ou quatre bras de séparation (5) qui sont disposés suivant des espacements angulaires (α) égaux l'un vis-à-vis de l'autre et qui s'étendent chacun du pivot rotatif jusqu'au bord libre (2a) du godet en forme de louche (2) ou de la cavité (3).

9. Dispositif suivant la revendication 8, caractérisé en ce que les bras de séparation (5) s'étendent jusqu'au-delà du bord libre (2a) du godet en forme de louche (2) et s'accrochent par leurs extrémités libres (5b) sur le bord libre (2a).

10. Dispositif suivant l'une des revendications précédentes, caractérisé en ce que chacun des bras de séparation (5) est biseauté sur ses bords longitudinaux (5a) en direction de la surface intérieure (3a) de la cavité (3) et est ainsi réalisé à la façon d'un couteau.

11. Dispositif suivant l'une des revendications précédentes, caractérisé en ce que chacun des bras de séparation est arrondi sur le côté de ses bords longitudinaux situé à l'opposé de la surface intérieure (3a) de la cavité (3).

12. Dispositif suivant l'une des revendications précédentes, caractérisé en ce que la cavité est essentiellement en forme de calotte.

13. Dispositif suivant l'une des revendications précédentes, caractérisé en ce que la partie de séparation (4) est réalisée d'une seule pièce.

14. Dispositif suivant l'une des revendications précédentes, caractérisé en ce que la partie de séparation (4) et/ou la partie supérieure (14) et/ou la partie inférieure (15) et/ou la partie d'actionnement sont en matière plastique (10).
